# EUROPÄISCHE PATENTSCHRIFT

(11) **EP 1 702 505 B1**
(45) Veröffentlichungstag und Bekanntmachung des Hinweises auf die Patenterteilung: **09.04.2008**
(21) Anmeldenummer: 06011616.7
(22) Anmeldetag: 21.08.2004
(51) Int. Cl.: A01D 41/12

(54) **Häcksel- und Verteilvorrichtung**
Chopping and distributor device
Dispositif de coupe et de distribution

(30) Priorität: 15.09.2003 DE 10342922
(43) Veröffentlichungstag der Anmeldung: 20.09.2006
(62) Teilanmeldung aus: 04019886.3
(73) Patentinhaber: CLAAS Selbstfahrende Erntemaschinen GmbH, 33428 Harsewinkel (DE)
(72) Erfinder: Niermann, Martin, 33428 Harsewinkel (DE); Brinkmann, Jörn, 33428 Harsewinkel (DE); Strieker, Norbert, 33425 Verl (DE); Hugenroth, Ludger, 48346 Ostbevern (DE); Stiller, Thorsten, 32791 Lage (DE); Teröde, Stefan, 48321 Warendorf (DE)

(56) Entgegenhaltungen:
- EP-A- 0 212 337
- EP-A- 1 277 387
- US-A- 5 797 793
- US-A1- 2003 109 293

## Beschreibung

Die Erfindung betrifft ein Verfahren und eine Vorrichtung zum Betreiben einer mit einem Schneidwerk ausgestatteten selbstfahrenden Erntemaschine nach dem Oberbegriff des Anspruchs 1 (siehe z.B. EP-A-1 277 387).

Aus der EP 0 212 337 ist eine Vorrichtung für Mähdrescher zum Verteilen von Stroh und Spreu bekannt. Bei dieser Vorrichtung sind zwei gegenläufig angetriebene Rotoren mit mehreren verstellbaren, schaufelartigen Blättern im hinteren Austragbereich des Mähdreschers nebeneinander um zueinander parallele Achsen drehbar gelagert. Beide Rotoren weisen an der Außenseite eine mechanisch verstellbare Teilummantelung auf, mit der der Streubereich der Vorrichtung begrenzt wird. Beide Rotoren werden gemeinsam über ein Getriebe mit der gleichen Drehzahl angetrieben.

Nachteilig bei dieser Vorrichtung ist, dass die Streubreite hinter dem Mähdrescher nur über die manuell einstellbare Ausrichtung der Rotoren und der Teilummantelungen bzw. der Einstellung der Drehzahl der Rotorblätter veränderbar ist, wobei das Stroh und die Spreu nicht gleichmäßig auf dem Feld verteilt werden.

Der Erfindung liegt daher die Aufgabe zugrunde einen Mähdreseher derart weiterzuentwickeln, dass der Verteiler den Erntegutstrom bei jeder Streubreite in einer gleichmäßigen Schichtdicke auf dem Feld verteilt.

Diese Aufgabe wird erfindungsgemäß durch die kennzeichnenden Merkmale des Anspruchs 1 gelöst.

Weitere vorteilhafte Wirkungen des Erfindungsgegenstandes ergeben sich aus den Unteransprüchen.

Um eine möglichst gleichmäßige Verteilung des Emtegutstromes auf dem Boden zu erzielen, wird der Antrieb zur Verstellung der wenigstens einen Abrisskante in Abhängigkeit von der Verteilung des Erntegutstroms auf dem Boden geregelt.

Vorteilhafterweise erfolgt die Verstellung der Abrisskante auch bei diesem Verfahren über ein elektrohydraulisches Stellglied, das mit einer Steuereinheit verbunden ist, so dass zum einen der Verstellbereich als auch die Verstellgeschwindigkeit der Abrisskante geregelt werden kann.

Indem die Verstellung des Stellgliedes vorteilhafterweise über einen Drehwinkelsensor detektiert wird, der mit der Steuereinheit verbunden ist, erhält die Steuerung ständig Information über die aktuelle Position der Abrisskante.

Zur Bestimmung der Verteilung des Erntegutstroms wird vorteilhafterweise ein Schichtdickenprofil des verteilten Erntegutstroms auf einer Austragsfläche ermittelt, dass als Maß für die Verteilung angesehen werden kann.

Um die Verteilung unmittelbar nach dem Verteilen online zu messen, wird die Verteilung des Erntegutes auf dem Boden mittels einer Sensiereinheit drahtlos ermittelt

In einem Ausführungsbeispiel wird zur Bestimmung der Verteilung des Häckselgutes ein Infrarotbild der Austragsfläche von einer Infrarotkamera aufgenommen und daraus ein Temperaturprofil erstellt mit dem die Verteilung geregelt wird. Das Infrarotbild hat den Vorteil, dass das Oberflächenprofil des Bodens berücksichtigt wird.

Damit das Stellglied die Bewegung der Abrisskante unmittelbar nach der Messung anpasst, wird in weiterer Ausgestaltung des Ausführungsbeispiels das Temperaturprofil an die Steuereinheit übermittelt, die das Profil indem ein Oberflächenprofil generiert wird, weiches zur Regelung des Stellgliedes herangezogen wird.

In einer alternativen Ausführung ist die Sensiereinheit ein Lasersensor, der die Austragsfläche abtastet und ein Oberflächenprofil erstellt. Der Lasersensor bietet eine im Vergleich zur Infrarotkamera preisgünstigere Apparatur mit ausreichender Genauigkeit.

Um auch bei diesem alternativen Ausführungsbeispiel die Bewegung der Abrisskante unmittelbar nach der Messung der Verteilung anzupassen, wird das Oberflächenprofil an die Steuereinheit übermittelt, die das Profil auswertet und das Stellglied abhängig vom Oberflächenprofil regelt.

Weitere vorteilhafte Ausführungen sind Gegenstand weiterer Unteransprüche und werden an Hand eines in mehreren Figuren dargestellten Ausführungsbeispiels beschrieben.

Es zeigen:
- Fig.1: eine schematische Draufsicht auf einen Mähdrescher bei der Emtefahrt,
- Fig.2: eine Seitenansicht eines rückwärtigen Ausschnittes eines Mähdreschers,
- Fig.3: eine Rückansicht auf einen Mähdrescher

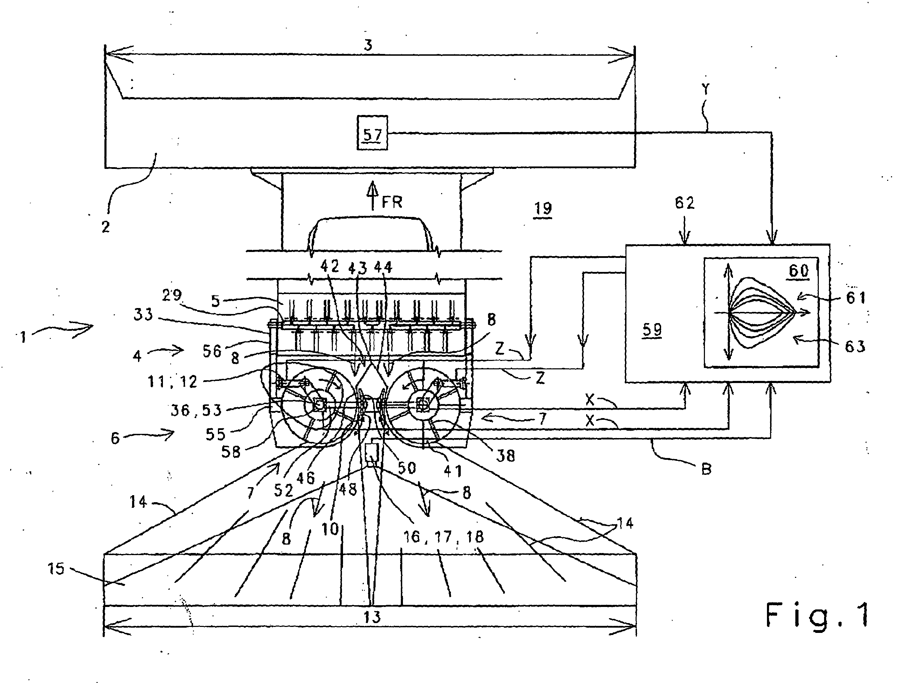

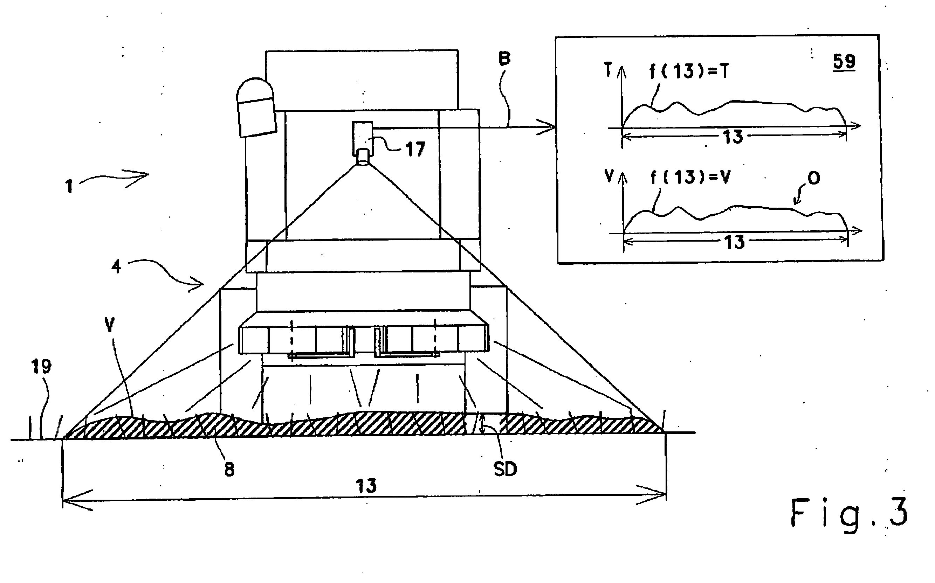

In Fig. 1 ist die schematische Draufsicht eines Mähdreschers 1 bei der Erntefahrt dargestellt. Mit einem frontseitig am Mähdrescher 1 angeordnetem Schneidwerk 2 mit einer Arbeitsbreite 3 wird das Erntegut auf dem Feld gemäht und anschließend an sich bekannten und daher hier nicht näher erläuterten Arbeitsorganen im Mähdrescher 1 zugeführt. Die Arbeitsorgane im Mähdrescher 1 trennen das Erntegut in Getreidekörner, Spreu und Stroh. An der Heckseite des Mähdreschers 1 ist eine Häcksel- und Verteileinrichtung 4 angeordnet, die aus einem Häckselorgan 5 besteht an die sich eine Verteileinrichtung 6 anschließt Die Verteileinrichtung 6 besteht aus zwei Wurfgebläsen 7, die den vom Häckselorgan 5 zugeführten Erntegutstrom 8 radial verteilen. Die Wurfgebläse 7 sind mit hin- und herschwenkenden Abrisskanten 10 ausgestattet, die jeweils getrennt von einem Stellglied 12 angetrieben werden. Der aus den Wurfgebläsen 7 austretende Erntegutstrom 8 wird durch die angetriebenen Abrisskanten 10 beim Austreten aus der Verteileinrichtung 6 umgelenkt und verteilt. Der Verstellbereich der Abrisskanten 10 bestimmt dabei einerseits eine Streubreite 13 des Erntegutstroms 8 und die Geschwindigkeit der Abrisskante 10 andrerseits eine Verteilung V des Erntegutstromes 8 auf dem Boden 19 (Fig. 3). Hinter den Wurfgebläsen 7 sind mehrere Flugbahnen 14 der verteilten Erntegutmenge 8 dargestellt, wobei die Enden der äußeren Flugbahnen 14 die Streubreite 13 nach Außen begrenzen. In Erntefahrtrichtung FR hinter der Streubreite 13 befindet sich die Austragsfläche 15, auf der der Erntegutstrom 8 gleichschichtig verteilt liegt. Auf diese Austragsfläche 15 ist die an der Rückseite des Mähdreschers 1 installierte Infrarotkamera 17 gerichtet.

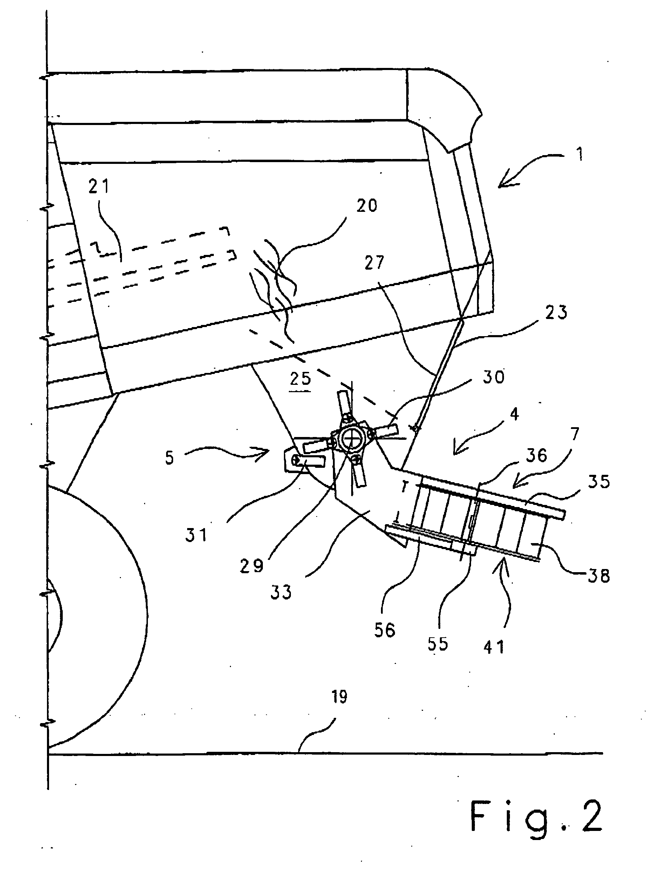

Die Wurfgebläse 7 lagern auf einem Rahmen 33 der außerhalb des Häckslergehäuses 25 auf der Häckslerwelle 29 gelagert ist. Mit dem Rahmen 33 ist ein nach hinten auskragendes Abdeckblech 35 (siehe Fig.2) verbunden, in dem die Rotationsachsen 36 antreibbar gelagert sind. Die Rotationsachsen 36 sind mit flexiblen Wurfschaufeln 38 besetzt, die unterseitig von einer mitrotierenden Scheibe 41 begrenzt werden sind. Zwischen den beiden aus dem oberen Abdeckblech 35, den rotierenden Achsen 36, den Wurfschaufeln 38 und den Scheiben 41 gebildeten Wurfgebläsen 7 ist ein V-förmiges Guttrennblech 42 angeordnet, dessen Spitze 43 gegen den von der Häcksel- und Verteilvorrichtung 6 kommenden Erntegutstrom 8 gerichtet ist. Die beiden Schenkel 44 des Guttrennblechs 42 schließen einen Raum zwischen sich ein und bilden starre Teilummantelungen 46 für die Wurfgebläse 7. An diese starren Teilummantelungen 46 schließen sich bewegliche Teilummantelungen 48 an, die aus einem weiteren Wandungsteil 50 bestehen. Das Wandungsteil 50 ist an einem Winkelhebel 52 befestigt, der auf einem Zapfen 53 drehbar aufgesetzt ist. Letzterer ist mit einer Quertraverse 55 fest verbunden, die über seitliche Längsträger 56 an dem Rahmen 33 befestigt ist. An dem anderen Ende des Winkelhebels 52 ist ein Stellglied 12 angelenkt, das seinerseits gelenkig mit der Quertraverse 55 verbunden ist und die Teilummantelungen 48 antreibt. Beide angetriebenen Teilummantelungen 48 bilden eine in Rotationsrichtung laufende Abrisskante 10 einer Auslassöffnung des Wurtgebläses 7.

Fig.2 zeigt eine Seitenansicht des rückwärtigen Ausschnitts des Mähdreschers 1. Das von hier nicht näher erläuterten und an sich bekannten Arbeitsorganen im Mähdrescher 1 vom Erntegut abgetrennte Stroh 20 gelangt über Hordenschüttler 21 in den hinteren Bereich des Mähdreschers 1. An der Gehäuserückwand 23 eines Häckslergehäuses 25 ist eine in zwei Stellungen verschwenkbare Schwadklappe 27 angebracht In der Schwadstellung SW (gestrichelt dargestellt) rutscht das von den Hordenschüttlern 21 auf die Schwadklappe 27 fallende Stroh 20 über die Häcksel- und Verteileinrichtung 4 hinweg und wird im Schwad auf dem Feld abgelegt (nicht dargestellt). In einer Häckselstellung HA der Schwadklappe 27 fällt das Stroh 20 auf das Häckselorgan 5. Das Häckselorgan 5 weist eine rotierende Häckslerwelle 29 auf, die in dem Häckslergehäuse 25 gelagert ist. Die Häckslerwelle 29 ist mit beweglichen Messern 30 besetzt, die mit im in dem Häckslergehäuse 25 fest angeordneten Gegenmessem 31 kämmen. Mit diesen Messern 30, 31 wird das Stroh 20 zu Häckselgut 11 zerkleinert und radial in die zwei Wurfgebläse 7 gefördert.

Der in Fig.1 dargestellte Mähdrescher weist an verschiedenen Stellen unterschiedliche Sensoren auf. Hierzu zählt zum einen ein Sensor 57, der die Arbeitsbreite 3 des Schneidwerks 2 erkennt. Im Bereich der Wurfgebläse 7 sind Drehwinkelsensoren 58 angeordnet, die die Position der Abrisskanten 10 detektieren. Auf der Heckseite des Mähdreschers 1 ist weiterhin eine Sensiereinheit 16 installiert.

Bei einem ersten Ausführungsbeispiel wird die Arbeitsbreite 3 des Schneidwerks 2 über den Sensor 57 am Mähdrescher 1 automatisch erkannt. Der Sensor 57 erzeugt ein von der Arbeitsbreite 3 des Schneidwerks 2 abhängiges Schneidwerksbreitensignal Y, sobald ein Schneidwerk 2 montiert ist. Das Schneidwerksbreitensignal Y wird an eine mit dem Sensor 57 verbundene Steuereinheit 40 übertragen.

Die Position der Abrisskante 10 wird mit dem Drehwinkelsensor 58 gemessen, der mit der Steuereinheit 59 verbunden ist. Der Drehwinkelsensor 58 erzeugt ein Signal X, das sich proportional zum Drehwinkel A des Winkelhebels 52 um die Rotationsachse 36 ändert.

In der Steuereinheit 59 ist ein Kennfeld 60 mit mehreren Funktionskurven 61 für verschiedene Schneidwerke 2 gespeichert, das die lageabhängige Geschwindigkeit und den Verstellbereich des Stellgliedes 12 regelt. Mit dem Schneidwerksbreitensignal Y wird eine zugehörige Funktionskurve 61 aus dem Kennfeld 60 ausgewählt und in Abhängigkeit vom Signal X' ein Steuerbefehl Z aus der Funktionskurve 61 festgelegt und an das Stellglied 12 übermittelt.

Um den Einfluss von weiteren Störgrößen 62 zu berücksichtigen, können mit den festgelegten Funktionskurven 61 und den weiteren Störgrößen 62 verzerrte Funktionskurven 63 von der Steuereinheit 59 errechnet werden. Zu den Störgrößen 62 gehören Erntegutparameter wie die Strohmenge, die Fahrgeschwindigkeit, die Windstärke/bzw.-richtung, die Neigung.

Fig.3 zeigt eine Rückansicht auf einen Mähdrescher 1, mit einer auf die Austragsfläche 15 gerichteten Infrarotkamera 17. Auf der Austragsfläche 15 liegt der verteilte Erntegutstrom auf dem Boden 19. Der Boden 19 mit dem verteilen Erntegutstrom ist im Querschnitt dargestellt, so dass ein Schichtdickenprofil SD des Erntegutstroms über die Streubreite 13 dargestellt ist. An dem Schichtdickenprofil SD ist eine Verteilung V des Erntegutstroms erkennbar.

Die an der Rückseite des Mähdreschers 1 angebrachte, auf die Austragsfläche 15 gerichtete Infrarotkamera 17 erzeugt ein Bildsignal B der Austragsfläche 15. Die Bildsignale B werden der mit der Infrarotkamera 17 verbundenen Steuereinheit 59 zugeführt.

Die Steuereinheit 59 erstellt mit den Bildsignalen B und den Signalen X ein Temperaturprofil T. Das Temperaturprofil T ist proportional zum Schichtdickenprofil SD, an dem die Verteilung V des Stroh-/Spreugemischs auf der Austragsfläche 15 erkennbar ist.

Die Vergleichbarkeit des Temperaturprofils T mit dem Schichtdickenprofil SD basiert auf der Grundlage, dass unterschiedliche Erntegutmengen auf dem Feld zu unterschiedlichen Oberflächentemperaturen auf dem Feld führen.

Die Steuereinheit 59 wertet das Temperaturprofil T aus indem ein Oberflächenprofil O generiert wird. Die Steuereinheit 59 übermittelt einen Steuerbefehl Z an das Stellglied 12, die das Stellglied 12 in Abhängigkeit vom Oberflächenprofil O derart regelt, dass die Verteilung V mit dem Ziel geändert wird, dass die Temperatur auf der Austragsfläche 15 an allen Stellen gleich ist.

Beide Verfahren lassen sich miteinander kombinieren, wobei das Schneidwerk 2 beispielsweise den Schwenkbereich der Abrisskante 10 und somit die Streubreite 13 regelt während die Verteilung V zur Regelung der Geschwindigkeit der bewegten Abrisskante 10 herangezogen wird.

Die Oberfläche der Austragsfläche 15 kann bei einem weiteren Ausführungsbeispiel mit einem Lasersensor 18 abgetastet werden, um die Verteilung zu detektieren. Aus den ermittelten Messdaten wird ein Oberflächenprofil O erstellt.

Die Steuereinheit 59 wertet das Oberflächenprofil O aus und übermittelt einen Steuerbefehl Z an das Stellglied 12 der das Stellglied 12 in Abhängigkeit vom Oberflächenprofil O derart regelt, dass die Verteilung V mit dem Ziel geändert wird, dass die Oberfläche der Austragsfläche 15 möglichst plan ist.

Die Vergleichbarkeit des Oberflächenprofils O mit dem Schichtdickenprofil SD ist unter der Annahme möglich, dass der Boden 19 auf dem der Erntegutstrom abgelegt wird annähernd plan ist und beide proportional voneinander abhängig sind.

Das Oberflächenprofil O wird an die Steuereinheit 59 übermittelt, die das Profil auswertet und das Stellglied 12 abhängig vom Oberflächenprofil O regelt.

Die Erfindung ist nicht auf die beschriebenen Ausführungsbeispiele beschränkt sondern kann an beliebigen Erntemaschinen eingesetzt werden, um die beschriebenen Effekte zu erzielen.

### Bezugszeichenliste:

- 1: Erntemaschine
- 2: Schneidwerk
- 3: Arbeitsbreite
- 4: Häcksel- und Verteileinrichtung
- 5: Häckselorgan
- 6: Verteileinrichtung
- 7: Wurtgebläse
- 8: Erntegutmenge
- 10: Abrisskante
- 11: Antrieb
- 12: Stellglied
- 13: Streubreite
- 14: Flugbahnen
- 15: Austragsfläche
- 16: Sensiereinheit
- 17: Infrarotkamera
- 18: Lasersensor
- 19: Boden
- 20: Stroh
- 21: Hordenschüttler
- 23: Gehäuserückwand
- 25: Häckslergehäuse
- 27: Schwadklappe
- 29: Häckslerwelle
- 30: Bewegliches Messer
- 31: Festes Messer
- 33: Rahmen
- 35: Abdeckblech
- 36: Rotationsachse
- 38: Wurfschaufeln
- 41: Scheibe

- 42: Guttrennblech
- 43: Spitze
- 44: Schenkel
- 46: Starre Teilummantelung
- 48: Bewegliche Teilummantelung
- 50: Wandungsteil
- 52: Winkelhebel
- 53: Zapfen
- 55: Quertraverse
- 56: Längsträger
- 57: Sensor
- 58: Drehwinkelsensor
- 59: Steuereinheit
- 60: Kennfeld
- 61: Funktionskurven
- 62: Störgrößen
- 63: Verzerrte Funktionskurven
- V: Verteilung
- B: Bildsignal
- X: Abrisskantensignal
- Y: Arbeitsbreitensignal
- Z: Stellgliedbefehl

## Patentansprüche

1. Verfahren zum Betreiben einer mit einem Schneidwerk (2) ausgestatteten selbstfahrenden Erntemaschine (1) mit einer im abgabeseitigem Bereich angeordneten Häcksel- und Verteileinrichtung (4), von der aus ein Erntegutstrom in wenigstens ein Wurfgebläse (7) gefördert wird, welches mit wenigstens einer mittels eines Antriebs (11) lageveränderlichen Abrisskante (10) zur Verstellung der Austrittsrichtung des Erntegutstromes aus dem Wurfgebläse (7) versehen ist,
**dadurch gekennzeichnet,**
**dass** der Antrieb (11) zur Verstellung der wenigstens einen Abrisskante (10) in Abhängigkeit von der Verteilung (V) des Erntegutstroms auf dem Boden (19) geregelt wird.

2. Verfahren zum Betreiben einer mit einem Schneidwerk (2) ausgestatteten selbstfahrenden Erntemaschine (1) nach Anspruch 1,
**dadurch gekennzeichnet,**
**dass** der Antrieb (11) ein elektrohydraulisches Stellglied (12) ist, das mit einer Steuereinheit (59) verbunden ist.

3. Verfahren zum Betreiben einer mit einem Schneidwerk (2) ausgestatteten selbstfahrenden Erntemaschine (1) nach mindestens einem der vorhergehenden Ansprüche,
**dadurch gekennzeichnet,**
**dass** die Verstellung des Stellgliedes (12) über einen Drehwinkelsensor (58) detektiert wird, der mit der Steuereinheit (59) verbunden ist.

4. Verfahren zum Betreiben einer mit einem Schneidwerk (2) ausgestatteten selbstfahrenden Erntemaschine (1) nach wenigstens einem der vorhergehenden Ansprüche,
**dadurch gekennzeichnet,**
**dass** zur Bestimmung der Verteilung (V) des Emtegutgemisches ein Schichtdickenprofil (SD) des Erntegutstromes auf einer Austragsfläche (15) ermittelt wird.

5. Verfahren zum Betreiben einer mit einem Schneidwerk (2) ausgestatteten selbstfahrenden Erntemaschine (1) nach wenigstens einem der vorhergehenden Ansprüche,
**dadurch gekennzeichnet,**
**das** die Verteilung (V) des Erntegutes auf dem Boden (19) mittels einer Sensiereinheit (16) drahtlos ermittelt wird.

6. Verfahren zum Betreiben einer mit einem Schneidwerk (2) ausgestatteten selbstfahrenden Erntemaschine (1) nach Anspruch 5,
**dadurch gekennzeichnet,**
**dass** die Sensiereinheit (16) eine Infrarotkamera (50) ist, die ein Infrarotbild der Austragsfläche (15) aufnimmt und daraus ein Temperaturprofil (T) erstellt.

7. Verfahren zum Betreiben einer mit einem Schneidwerk (2) ausgestatteten selbstfahrenden Erntemaschine (1) nach wenigstens einem der vorangegangenen Ansprüche,
**dadurch gekennzeichnet,**
**dass** das Temperaturprofil (T) an die Steuereinheit (59) übermittelt wird, die mit dem Temperaturprofil (T) ein Oberflächenprofil (O) generiert und das Stellglied (12) abhängig vom Oberflächenprofil (O) regelt.

8. Verfahren zum Betreiben einer mit einem Schneidwerk (2) ausgestatteten selbstfahrenden Erntemaschine (1) nach Anspruch 5,
**dadurch gekennzeichnet,**
**dass** die Sensiereinheit (16) ein Lasersensor (18) ist, der die Austragsfläche (15) abtastet und ein Oberflächenprofil (O) erstellt.

9. Verfahren zum Betreiben einer mit einem Schneidwerk (2) ausgestatteten selbstfahrenden Erntemaschine (1) nach wenigstens einem der vorangegangenen Ansprüche,
**dadurch gekennzeichnet,**
**dass** das Oberflächenprofil (O) an die Steuereinheit (59) übermittelt wird, die das Profil auswertet und das Stellglied (12) abhängig vom Oberflächenprofil (O) regelt.

## Claims

1. A method of operating a self-propelled harvester (1) which is equipped with a cutting mechanism (2) and having a chaff cutting and distributor device (4) which is arranged in the discharge region and from which a flow of crop material is conveyed into at least one impeller blower (7) provided with at least one break-away edge (10) which is variable in position by means of a drive (11) for adjusting the direction of exit of the flow of crop material from the impeller blower (7),
**characterised in that**
the drive (11) for adjusting the at least one break-away edge (10) is regulated in dependence on the distribution (V) of the flow of crop material on the ground (19).

2. A method of operating a self-propelled harvester (1) which is equipped with a cutting mechanism (2) according to claim 1 **characterised in that** the drive is an electrohydraulic adjusting member (12) connected to a control unit (59).

3. A method of operating a self-propelled harvester (1) which is equipped with a cutting mechanism (2) according to at least one of the preceding claims **characterised in that** the adjustment of the adjusting member (12) is detected by way of a rotary angle sensor (58) connected to the control unit (59).

4. A method of operating a self-propelled harvester (1) which is equipped with a cutting mechanism (2) according to at least one of the preceding claims **characterised in that** for determining the distribution (V) of the crop material mixture a layer thickness profile (SD) of the flow of crop material on a discharge surface (15) is ascertained.

5. A method of operating a self-propelled harvester (1) which is equipped with a cutting mechanism (2) according to at least one of the preceding claims **characterised in that** the distribution (V) of the crop material on the ground (19) is ascertained wirelessly by means of a sensing unit (16).

6. A method of operating a self-propelled harvester (1) which is equipped with a cutting mechanism (2) according to claim 5 **characterised in that** the sensing unit (16) is an infrared camera (50) which records an infrared image of the discharge surface (15) and produces a temperature profile (T) therefrom.

7. A method of operating a self-propelled harvester (1) which is equipped with a cutting mechanism (2) according to at least one of the preceding claims **characterised in that** the temperature profile (T) is communicated to the control unit (59) which generates a surface profile (O) with the temperature profile (T) and regulates the adjusting member (12) in dependence on the surface profile (O).

8. A method of operating a self-propelled harvester (1) which is equipped with a cutting mechanism (2) according to claim 5 **characterised in that** the sensing unit (16) is a laser sensor (18) which scans the discharge surface (15) and produces a surface profile (O).

9. A method of operating a self-propelled harvester (1) which is equipped with a cutting mechanism (2) according to at least one of the preceding claims **characterised in that** the surface profile (0) is communicated to the control unit (59) which evaluates the profile and regulates the adjusting member (12) in dependence on the surface profile (O).

## Revendications

1. Procédé de fonctionnement d'une machine de récolte (1) automotrice équipée d'un mécanisme de coupe (2) et comportant un dispositif broyeur et éparpilleur (4) disposé dans la zone d'éjection, depuis lequel un flux de produit récolté est acheminé jusqu'à au moins une soufflante d'éjection (7) pourvue d'un bord de décollement (10) dont la position peut être modifiée au moyen d'un dispositif d'entraînement (11) aux fins de régler la direction de sortie du flux de produit récolté éjecté hors de la soufflante d'éjection (7),
**caractérisé par le fait que**
le dispositif d'entraînement (11) pour le déplacement du bord de décollement (10) au nombre d'au moins un est réglé en fonction de l'éparpillement (V) du flux de produit récolté sur le sol (19).

2. Procédé de fonctionnement d'une machine de récolte (1) automotrice équipée d'un mécanisme de coupe (2) selon la revendication 1, **caractérisé par le fait que** le dispositif d'entraînement (11) est un actionneur (12) électrohydraulique qui est relié à une unité de commande (59).

3. Procédé de fonctionnement d'une machine de récolte (1) automotrice équipée d'un mécanisme de coupe (2) selon au moins une des revendications précédentes, **caractérisé par le fait que** le réglage de l'actionneur (12) est détecté par un capteur d'angle de rotation (58) qui est relié à une unité de commande (59).

4. Procédé de fonctionnement d'une machine de récolte (1) automotrice équipée d'un mécanisme de coupe (2) selon au moins une des revendications précédentes, **caractérisé par le fait que** pour déterminer l'éparpillement (V) du mélange de produit récolté on détermine un profil d'épaisseur de couche (SD) de produit récolté sur une surface d'épandage (15).

5. Procédé de fonctionnement d'une machine de récolte (1) automotrice équipée d'un mécanisme de coupe (2) selon au moins une des revendications précédentes, **caractérisé par le fait qu'**on détermine l'éparpillement (V) du produit récolté sur le sol (19), sans fil, à l'aide d'une unité de palpage (16).

6. Procédé de fonctionnement d'une machine de récolte (1) automotrice équipée d'un mécanisme de coupe (2) selon la revendication 5, **caractérisé par le fait que** l'unité de palpage (16) est une caméra infrarouge (50) qui enregistre une image infrarouge de la surface d'épandage (15) et produit un profil de température (T) à partir de celle-ci.

7. Procédé de fonctionnement d'une machine de récolte (1) automotrice équipée d'un mécanisme de coupe (2) selon au moins une des revendications précédentes, **caractérisé par le fait que** le profil de température (T) est transmis à l'unité de commande (59) qui génère un profil de surface (O) à partir dudit profil de température (T) et règle l'actionneur (12) en fonction du profil de surface (O).

8. Procédé de fonctionnement d'une machine de récolte (1) automotrice équipée d'un mécanisme de coupe (2) selon la revendication 5, **caractérisé par le fait que** l'unité de palpage (16) est un palpeur à laser (18) qui balaie la surface d'épandage (15) et produit un profil de surface (O).

9. Procédé de fonctionnement d'une machine de récolte (1) automotrice équipée d'un mécanisme de coupe (2) selon la revendication 5, **caractérisé par le fait que** le profil de surface (O) est transmis àl'unité de commande (59) qui exploite le profil et règle l'actionneur (12) en fonction du profil de surface (O).
